# EUROPÄISCHE PATENTSCHRIFT

(11) **EP 1 724 240 B1**
(45) Veröffentlichungstag und Bekanntmachung des Hinweises auf die Patenterteilung: **23.06.2010**
(21) Anmeldenummer: 05405349.1
(22) Anmeldetag: 17.05.2005
(51) Int. Cl.: C02F 5/00

(54) **Verfahren zur Konditionierung von Bergwässern in primären Entwässerungsystemen von Tunnelbauwerken**
Process for conditioning seeping water in draining systems of tunnels
Procédé pour le traitement de l'eau d'infiltration dans les systèmes de drainage des tunnels

(43) Veröffentlichungstag der Anmeldung: 22.11.2006
(73) Patentinhaber: Wegmüller, Marcel Christian, 4125 Riehen (CH)
(72) Erfinder: Wegmüller, Marcel Christian, 4125 Riehen (CH)
(74) Vertreter: Bremi, Tobias Hans

(56) Entgegenhaltungen:
- WO-A-02/16731
- CH-A5- 689 452

## Beschreibung

### TECHNISCHES GEBIET

Die Erfindung betrifft ein Verfahren, zur Verhinderung von Ablagerungen in Tunnelbauten, **dadurch gekennzeichnet, dass** dem Bergwasser im sekundären Teil des Entwässerungssystems ein oder mehrere Wasserkonditionierungsmittel beigemischt werden und danach dieses Bergwasser dem primären Entwässerungssystem zugeführt wird.

### STAND DER TECHNIK

Bei der Entwässerung von Tunnelbauwerken unterscheidet man das primäre und das sekundäre Entwässerungssystem. Das primäre Entwässerungssystem umfasst die Elemente des Entwässerungssystems, die nach Fertigstellung des Bauwerks nicht mehr frei zugänglich sind, wie z.B. die anstehende Felsoberfläche 2 mit ihren Klüften, Noppenbahnen bzw. -streifen, Drainagematten 17, Vliese, Drainagebohrungen, Sickerpackungen 4 um die Drainagerohre 5 herum, Sickerschichten, Öffnungen der Drainagerohre 21 (aussen) und dgl. (vgl. Figuren). Das sekundäre Entwässerungssystem eines Bauwerks beinhaltet, die nach der Fertigstellung des Bauwerks frei zugänglichen Elemente des Entwässerungssystems (EWS) wie z.B. Drainagerohre 22 (innen), Schächte 7, Schlammsammler, Ableitungen 8, Hauptentwässerungsleitungen 9 und dgl.

Bei der Entwässerung von Tunnelbauwerken fallen Grund- und Bergwässer (Sickerwässer) an, die einen unterschiedlich hohen Gehalt an gelösten, überwiegend anorganischen Wasserinhaltsstoffen aufweisen, die häufig harte Ablagerungen verursachen. Diese Ablagerungen bestehen üblicherweise überwiegend aus Calciumcarbonat, untergeordnet Magnesiumcarbonat und Eisenoxiden, alle gegebenenfalls in ihrer hydratisierten Form. Diese Ablagerungen aus überwiegend Carbonaten in Drainage- und Entwässerungssystemen werden auch als Versinterung bezeichnet. Diese Ablagerungen entstehen durch die Veränderung der physikalischen und meist auch chemischen Bedingungen beim Zuströmen und Kontakt der Grund- und Bergwässer auf das Bauwerk und beim Eintritt in das Entwässerungssystem. Die Ablagerungen bilden sich auf der gesamten Fliesstrecke des Grund- und Bergwassers, d.h. die Ablagerungen bilden sich sowohl in den nahegelegenen Felsklüften wie auch in den Drainagematten 17, den Sickerpackungen 4 um die Drainagerohre 5, den Öffnungen der Drainagerohre 21 (aussen), in den Drainagerohren 22 (innen) oder in den Hauptentwässerungsleitungen 9.

Die Problematik dieser Ablagerungen wird in dem Buch: Wegmüller M. C.: Einflüsse des Bergwassers auf Tiefbau / Tunnelbau, Schweiz Stäubli Verlag Zürich, Juli 2001, ISBN 3 7266 0052 3, auf den Seiten 107-130, eingehend beschrieben.

Diese festhaftenden, harten Ablagerungen verkleinern die Abflussquerschnitte der Entwässerungssysteme oder schliessen sie in Extremfällen sogar ganz. Als Folge davon können die anfallenden Wassermengen nicht mehr frei abfliessen, und es entstehen Rückstaus, die grosse Schäden verursachen können. Die Schäden reichen von unerwünschten Wasserinfiltrationen ins Bauwerksinnere über hohe Wasserdrucke auf die Bauwerksschale bis hin zu Eisbildungen auf Fahrbahnen und Vernässungen in Gewölben, verbunden mit der Gefahr von elektrischen Kurzschlüssen bei Bahntunneln und dergleichen. Zudem setzt der direkte Wasserkontakt die Dauerhaftigkeit (Lebensdauer) der Bauwerke herab. Insbesondere bei solchen Bauwerken, deren Stabilität von der einwandfreien Funktionstüchtigkeit des Entwässerungssystems abhängig ist, kann die Bildung von Ablagerungen in dem Entwässerungssystem fatale Folgen haben.

Da die einzelnen Teile eines Entwässerungssystems in Serie geschaltet sind führt das Versagen eines einzelnen Teils infolge von Ablagerungen zwangsläufig zum Versagen des Gesamtsystems.
In Teilen des primären Entwässerungssystems, beispielsweise den Drainagematten 17, Sickerpackungen 4 um die Drainagerohre 5 oder Drainagebohrungen im Fels können Ablagerungen die Leistungsfähigkeit der Entwässerung sehr schnell reduzieren oder ganz zerstören. Im primären Teil eines Entwässerungssystems sind Unterhaltsarbeiten, wegen der fehlenden Zugänglichkeit, nur mit sehr hohem Aufwand möglich, wobei aufwendige Sanierungsarbeiten oft die einzige Möglichkeit darstellen, um die Funktionstüchtigkeit des Entwässerungssystems wiederherzustellen.

In den Bereichen des sekundären Entwässerungssystems, beispielsweise in den Drainagerohren 22 (innen) den Schächten 7, Ableitungen 8 und Hauptentwässerungsleitungen 9 sind periodische Unterhaltsarbeiten zum Entfernen entstandener Ablagerungen wegen der besseren Zugänglichkeit zwar möglich, aber auch hier sind die periodischen konventionellen Unterhaltsarbeiten sehr kostenintensiv und nicht immer erfolgreich.
Die zur Zeit gebräuchlichsten konventionellen Verfahren zum Entfernen von Ablagerungen in Entwässerungssystemen sind die elektromechanische Reinigung mit Spezialwerkzeugen, beispielsweise Kanalfernsehen verbunden mit Robotik sowie Hochdruckspülen oder Hochdruckfräsen mit Wasser. Diese Verfahren sind ausserordentlich kostspielig, arbeitsintensiv und führen häufig zu unerwünschten Betriebsunterbrechungen. Sind diese Arbeiten aus bautechnischen Gründen (beispielsweise keine Zugangsmöglichkeiten wie im primären Entwässerungssystem der Fall) nicht möglich oder führen sie nicht zu den gewünschten Ergebnissen, so kann die Funktionstüchtigkeit des gesamten Entwässerungssystems meist nur mit aufwendigen Sanierungsarbeiten wiederhergestellt werden.
Aus der CH 689452 ist ein Verfahren zur Verhinderung von zementbedingten Ablagerungen in einem Bauwerksentwässerungssystem, welches dadurch gekennzeichnet ist, dass dem abzuführenden Sicker- oder Grundwasser Konditionierungsmittel zugegeben wird. Das Konditionierungsmittel wird dabei dem primären und/oder sekundären Bauwerksentwässerungssystem unter Ausnutzung des Gefälles zugegeben.

### DARSTELLUNG DER ERFINDUNG

Die Aufgabenstellung für die vorliegende Erfindung kann deshalb wie folgt beschrieben werden: Gesucht wird eine Möglichkeit zum Schutz des primären Entwässerungssystems vor der Bildung von harten Ablagerungen. Der Schutz muss dauerhaft, d.h. während der gesamten Lebensdauer des Bauwerks, möglich sein. Der Schutz muss partiell einsetzbar sein, d.h. Zonen ohne Ablagerungen müssen vom Schutzumfang ausgenommen werden können. Die Schutzmöglichkeit muss entsprechend den hohen Anforderungen bei Tunnelbauwerken kostengünstig, unterhaltsfreundlich, umweltverträglich und sehr robust sein. Gleichzeitig soll durch die Erfindung auch das sekundäre Entwässerungssystem partiell oder gesamthaft geschützt sein.
Die Einsatzmöglichkeiten für ein solches Verfahren sind universell, gibt es doch auf der ganzen Welt Probleme mit Ablagerungen in Tunnelentwässerungssystemen. Die Kosten für die Sanierung der betroffenen Bauwerke, übersteigt fast immer eine Millionen Euro und kann bis zu über 100 Millionen Euro erreichen, wie beispielsweise beim Burnley Tunnel in Melbourne, Australien (Eröffnung 2000; Sanierung 2000 - 2006)
In den vergangenen Jahren wurde eine Reihe von Verfahren und Produkten entwickelt um die Bildung von Ablagerungen in Tunnelentwässerungssystemen zu reduzieren oder ganz zu verhindern. Alle diese Verfahren sind nur im sekundären Teil des Entwässerungssystems anwendbar oder weisen schwerwiegende Nachteile auf, die einen Einsatz im primären Entwässerungssystem verunmöglichen

Aus der WO 94/19288 ist ein Verfahren zur Verhinderung von Ablagerungen in einem Bauwerksentwässerungssystem bekannt, das dadurch gekennzeichnet ist, dass dem abzuführenden Sicker- oder Grundwasser ein Konditionierungsmittel zugegeben wird, das ein Stabilisierungsmittel für Härtebildner und ein Dispergiermittel enthält. Die Anwendung des Verfahrens beschränkt sich dabei auf das sekundäre Entwässerungssystem, Lösungen für das primäre Entwässerungssystem fehlen gänzlich.

Konditionierungsmittel für wässrige Systeme werden auf Grund ihrer Wirkungsweise verschieden bezeichnet, z. B. als Dispergiermittel, Härtestabilisatoren und Schutzkolloide. Dazu gehören auch Sequestierungsmittel (Komplexierungsmittel) und gegebenenfalls auch weitere grenzflächenaktive Stoffe (Tenside) sowie Biozide.

Für die vorliegende Erfindung sind insbesondere Härtestabilisatoren wichtig, d.h. Verbindungen, die zur Stabilisierung der Härtebildner in Entwässerungssystemen geeignet sind, wobei sie das Kristallwachstum desaktivieren und zumeist Oberflächenladung verändernde Eigenschaften aufweisen, sowie Dispergatoren (Dispergiermittel). Dispergiermittel sind Oberflächenladung verändernde Verbindungen, die ungelöste Feststoffteilchen im Wasser - auch im kolloidalen Bereich - dispergieren, d. h. fein verteilt halten. Wird im Folgenden der Begriff Konditionierungsmittel für Tunnelentwässerungssysteme verwendet so sind darunter in erster Linie diese beiden Gruppen gemeint.

Für die vorliegende Erfindung können auch Säuren als Wasserkonditionierungsmittel im weiteren Sinne wichtig sein, wenn es darum geht, bereits bestehende Ablagerungen im primären Entwässerungssystem rasch und effizient aufzulösen.

Härtestabilisatoren und Dispergatoren überschneiden sich oft in ihrer Wirkung. Daher werden Konditionierungsmittel, bevorzugt in Kombinationen von Härtestabilisatoren und Dispergatoren eingesetzt, wobei sich in der Regel ein höherer Wirkungsgrad gegenüber dem getrennten Einsatz ergibt. Konditionierungsmittel können auch noch weitere geeignete Zusätze enthalten, wobei aber immer für die Behandlung des abzuführenden Sicker- oder Grundwassers entscheidend sein muss, dass durch den Einsatz eines spezifischen Konditionierungsmittels bzw. Konditionierungsmittelgemisches eine umweltgerechte Verhinderung von Versinterungen erreicht wird. So enthält die nachfolgende Aufzählung von Konditionierungsmitteln auch phosphathaltige Produkte die technisch einwandfrei funktionieren, aber aus Umweltschutzgründen nicht in allen Ländern eingesetzt werden können. Deshalb sind die jeweiligen Ländervorschriften zu beachten.

Als Konditionierungsmittel für Tunnelentwässerungssysteme eignen sich z.B. Polysuccinimid, gegenebenfalls im Gemisch mit Fettsäuren, anorganische kondensierte Phosphate, wie Alkali-di-, -tri- und -polyphosphate, organische Phosphorverbindungen oder Organophosphonsäuren, wie beispielsweise 2-Methylpropanphosphonsäure, Hydroxyethylidendiphosphonsäure, Aminomethylen-phosphonsäuren, N-haltige Phosphonate, Aminophosphonate, Aminoalkylen-phosphonsäuren wie Aminotri(methylenphosphonsäure) oder Diethylentriamino-penta(methylenphosphonsäure), Poly(aminomethylenphosphonate), oder Hydroxyethyl-ethylen-(di(aminomethylen)-phosphonsäure), ferner Phosphonocarbonsäuren, z. B. Phosphonobutan-tricarbonsäure, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, wie oxidierte Zellulose, Stärke oder Dextrin, Proteine und andere Eiweissprodukte, wasserlösliche Polyaminosäuren, beispielsweise Polyasparaginsäure, Silikate, wie Alkalisilikate, Wasserglas oder Zeolithe. Wasserlösliche Salze entsprechender Säuren sind ebenfalls geeignet.

Als Dispergatoren für Tunnelentwässerungssysteme eignen sich Tanninderivate, wie sulfitierte Tannine, Ligninsulfonate, sulfonierte Kondensationsprodukte des Naphthalins mit Formaldehyd, anionische Polyelektrolyte, z.B. Polymerisate auf Acrylatbasis, wie Polyacrylate, Polymethacrylate, Polyacrylamide und Copolymere von Acrylsäure bzw. Methacrylsäure und Acrylamid, ferner P-haltige polymere Verbindungen, wie N-Phosphomethyl-makrocyclische Polyether oder phosphonomethylierte Oxyalkylenamine sowie phosphinsäure-haltige Homo- und Copolymere von Acrylsäure und Acrylamid und oligomere Phosphinico-Bernsteinsäure-Verbindungen (wie sie in der US-A 4088678 beschrieben werden). Weiter sind geeignet Polymere mit N-substituierten Amidfunktionen, z. B. sulfomethylierte oder sulfoethylierte Polyacrylamide und Polymethacrylamide und Copolymere bzw. Terpolymere mit Acrylsäure und Maleinsäureester, N-Butylacrylamid und dessen Copolymere und Acrylamidopropionsulfonsäure als Salz und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure. Solche und ähnliche Verbindungen sind z. B. beschrieben in EP-A 225.596, EP-A 238 852, EP-A 238 853, EP-A 238 729, EP-A 265 846, EP-A 310099, EP-A 314083, EP-A 330876 oder EP-A 517470. Wasserlösliche Salze entsprechender Säuren sind ebenfalls geeignet.

In den Schriften EP 0 638 049 B1, CH 689 452 A5 sowie aus WO 02/16731 A2 werden sogenannte Depotsteine (Steine) beschrieben die dazu geeignet sind, Ablagerungen auch im primären Entwässerungssystem eines Tunnels zu verhindern. Diese Steine enthalten ein oder mehrere Konditionierungsmittel in fester Form und werden durch geeignete Verfahren zu Tabletten, Blöcken oder Stangen geformt und danach in das Entwässerungssystem gelegt. Bei Kontakt des Grund- oder Bergwassers mit den Steinen lösen sich diese langsam auf, geben den Wirkstoff frei und schützen dadurch alle nachfolgenden Teile des Entwässerungssystems vor der Bildung von harten Ablagerungen. Diese Depotsteine können zwar zum Schutz des primären Entwässerungssystems verwendet werden, weisen aber, wenn sie allein verwendet werden, mehrere gravierende Nachteile auf:
- Nach dem Einbau der Steine in das primäre Entwässerungssystem können sie, wegen der fehlenden Zugänglichkeit, nicht mehr ersetzt werden und da sie sich ständig verkleinern verlieren sie kontinuierlich an Wirkung, bis sich wiederum neue harte Ablagerungen bilden. Die maximale Wirkungsdauer der Steine beträgt ein paar Monate bis 2-3 Jahre.
- Die Steine sind sehr teuer und kosten oft mehr als das zehnfache, bezogen auf den effektiven Wirkstoffgehalt, gegenüber dem Verfahren zur flüssigen Konditionierung (WO 94/19288)
- Bereits während dem Bau des Tunnels muss entschieden werden, wo die Steine eingebaut werden. Während dem Bau kann aber in der Regel keine exakte Aussage über die zu erwartenden Ablagerungen innerhalb einer Halterung 23 (eine Halterung bezeichnet die Strecke zwischen zwei Drainagerohrschächten) gemacht werden. Zudem weisen Tunnelbauwerke sehr oft trockene Zonen auf die nie Ablagerungen verursachen. Dies führt dazu, dass die Steine, in der Regel, flächendeckend eingebaut werden, wie beispielsweise im Autobahntunnel Baregg, dem Strassentunnel Klosters oder dem Bahntunnel Dettenberg (alle Objekte in der Schweiz). So werden die Steine oft in Zonen eingebaut, in denen sie unnötig sind oder die eingebaute Menge nicht den effektiven Anforderungen entspricht.
- Da die Steine, im primären Entwässerungssystem nicht nachgelegt werden können versucht man die Mengen und damit verbunden die Verweilzeiten der Steine im primären Entwässerungssystem zu erhöhen beziehungsweise zu verlängern. Durch die höheren Wirkstoffkonzentrationen im Bergwasser vergrössert sich dadurch die Gefahr von Biofouling, weshalb weitere Zusätze wie Konservierungsmittel zugemischt werden müssen. Wiederum sinkt die Funktionstüchtigkeit, die Wirtschaftlichkeit und die Umweltverträglichkeit dieser Methode.
- Die Menge an Konditionierungsmittel, die durch die Steine abgegeben werden, ist nicht gleichmässig d.h. linear sondern beschreibt eine exponentielle Kurve. Dies führt dazu, dass zu Beginn der Behandlung i.d.R. zu viel Mittel im Bergwasser vorhanden ist, und am Ende zu wenig. Dies wirkt sich negativ auf die Funktionstüchtigkeit und Wirtschaftlichkeit dieser Methode aus.

Nun wurde überraschend eine neue Lösung zur Konditionierung von Bergwässern im primären Entwässerungssystem von Tunnelbauwerken gefunden. Die Lösung der Aufgabe besteht darin, dass man ein Verfahren respektive eine Vorrichtung zur Verhinderung von Ablagerungen in Tunnelbauwerken gefunden hat, **dadurch gekennzeichnet, dass** dem Bergwasser im sekundären Teil des Entwässerungssystems ein oder mehrere Wasserkonditionierungsmittel beigemischt werden und danach dieses Bergwasser dem primären Entwässerungssystem zugeführt wird.

Durch die Rückführung des im sekundären Entwässerungssystem anfallenden Bergwassers in das primäre Entwässerungssystem kann ein Schutz des primären Entwässerungssystems vor der Bildung von harten Ablagerungen erreicht werden. Voraussetzung für die Funktionstüchtigkeit des Verfahrens ist die vorausgehende Konditionierung des Bergwassers, das im sekundären Entwässerungssystem anfällt, mit einem oder mehreren Konditionierungsmitteln, bevorzugtermassen in einer Gesamtmenge von 0,1g/m³ bis 10000g/m³, dies vorzugsweise über die gesamte Tunnellänge oder aber auch nur in Teilabschnitten. Die Konditionierung des Bergwassers im sekundären Entwässerungssystem kann mit einer Dosieranlage und zugehöriger Dosierleitung, die das Mittel an geeigneter Stelle im Entwässerungssystem zudosiert, erfolgen oder aber auch mittels Depotsteinen, die an geeigneter Stelle im Entwässerungssystem platziert werden. Bei grösseren Wassermengen über 0,5 l/s - 5 l/s ist die Konditionierung des Bergwassers mit einer Dosieranlage normalerweise wesentlich günstiger als die Variante mit den Steinen, da allein die Kosten für das Auslegen der Steine zu hoch werden. Zudem sind die flüssigen Konditionierungsmittel wesentlich günstiger als die Depotsteine (bezogen auf den Gehalt an Wirkstoff). Damit nicht alle Halterungen mit einer separaten Dosieranlage konditioniert werden müssen, ist es von grossem Vorteil, zur Konditionierung des Bergwassers im sekundären Entwässerungssystem d.h. in diesem Fall in den Drainagerohren selbst, die Drainagerohre in den Schächten kurzzuschliessen d.h. miteinander zu verbinden. Dies geschieht z.B. mit Halbschalen, die man zwischen die Drainagerohrenden legt oder mit Pfropfen, Syphons, Absperrblasen und dgl., mit denen man den Abfluss in den Ableitungen versperrt. Das konditionierte Bergwasser des sekundären Entwässerungssystems wird nun mittels Pumpen, besonders geeignet sind dafür Tauchpumpen, die in den Schächten des Entwässerungssystems eingesetzt werden, über Schlauchleitungen und deren Öffnungen in das primäre Entwässerungssystem zurückgeführt und dort dem zuströmenden Grund- und Bergwasser zugemischt. Durch den hohen Gehalt an Konditionierungsmittel im zurückgeführten Bergwasser kann auch das frisch anfallende, unbehandelte Bergwasser des primären Entwässerungssystems vor der Bildung von harten Ablagerungen geschützt werden. Bei der technischen Umsetzung der beschriebenen Lösung gibt es viele Parameter zu beachten, die die Ausführung der Lösung bestimmen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: zeigt eine schematische Darstellung eines Tunnelentwässerungssystems. Die linke Hälfte der Figur zeigt einen Tunnelabschnitt, der mit dem erfindungsgemässen Verfahren behandelt wird. Die rechte Seite der Figur zeigt den gleichen Tunnelabschnitt ohne Behandlung;
- Fig. 2: zeigt einen vereinfachten schematischen Querschnitt durch einen Tunnel;
- Fig. 3: zeigt einen vereinfachten schematischen Schnitt durch eine Gewölbedrainage in einem Tunnel; und
- Fig. 4: zeigt einen Schnitt durch eine Schlauchleitung mit Clip zum Schutz der Öffnungen der Schlauchleitung.

### WEGE ZUR AUSFÜHRUNG DER ERFINDUNG

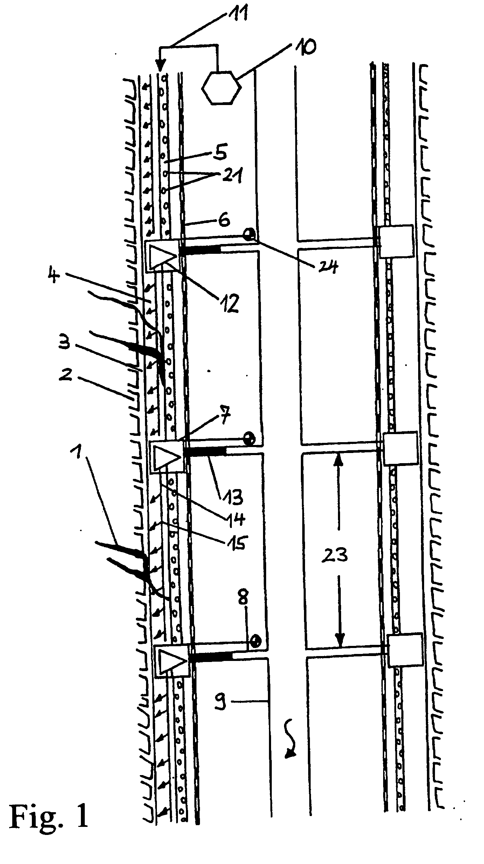

Fig. 1 zeigt, wie erwähnt, eine schematische Darstellung eines Tunnelentwässerungssystems. Die linke Hälfte der Figur zeigt einen Tunnelabschnitt, der mit dem erfindungsgemässen Verfahren behandelt wird, respektive in welchem eine erfindungsgemässe Vorrichtung eingebaut ist. Die rechte Seite der Figur zeigt den gleichen Tunnelabschnitt ohne Behandlung. Das Bergwasser 1 tritt aus dem Fels 2, dringt durch die Spritzbetonschale 3, wird in der Sickerpackung 4 und den Drainagematten 17 gesammelt und über die Öffnungen 21 der Drainagerohre 5 von aussen, ins Innere des Drainagerohrs 22 geleitet. Von dort aus fliesst das Bergwasser, dem Längsgefälle folgend, in den nächsten Schacht 7 der Drainageleitung. Bleibt das Bergwasser unbehandelt wie auf der rechten Tunnelseite in Figur 1 dargestellt, wird es nach dem Eintritt in den Schacht der Drainageleitung in die Hauptentwässerungsleitung 9 abgeleitet.

Auf der linken Seite der Figur 1 fliesst das Bergwasser in den nächsten Schacht 7 der Drainageleitung, wo es aufgestaut wird. Die Ableitungen 8 sind verstopft, sodass das Bergwasser in den Drainagerohren 5 nicht in die Hauptentwässerung 9 abgeleitet wird, sondern im Drainagerohr weiterfliesst. Das Bergwasser wird in den Schächten 7 der Drainagerohre gesammelt und mit Pumpen 12 über Schlauchleitungen 14 und deren Öffnungen 15, in die Sickerpackungen 4 der Drainagerohre 5 zugeführt.

Die Darstellung zeigt zudem die Bauwerksabdichtung 6, eine Dosieranlage 10 mit zugehöriger Dosierleitung 11, Absperrblasen 13, den Abstand zwischen zwei Schächten einer sog. Halterung 23 sowie eine Zeitschaltuhr 24. Die Figur 1 soll sowohl das Beispiel Mutten, wie auch den restlichen Teil des Textes, verständlich machen.

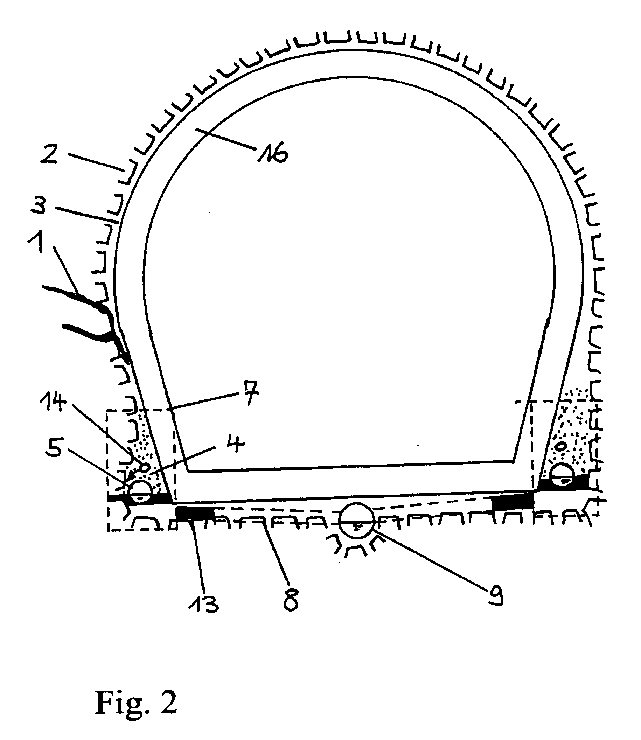

Fig. 2 zeigt einen vereinfachten schematischen Querschnitt durch einen Tunnel. Die Figur 2 soll das Beispiel Mutten und den restlichen Teil des Textes verständlich machen. Gegenüber der Fig. 1 enthält die Fig. 2 zusätzlich den Tunnelinnenring 16.

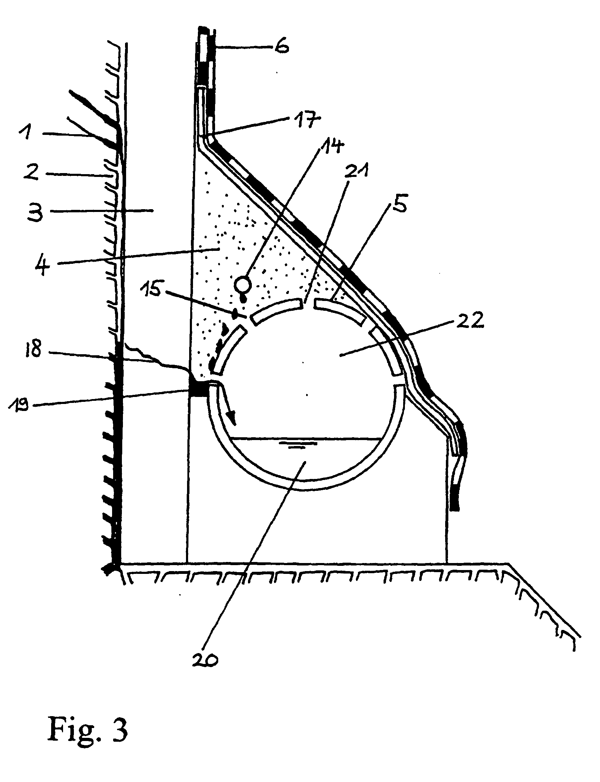

Fig. 3 zeigt einen vereinfachten schematischen Schnitt durch eine Gewölbedrainage in einem Tunnel. Die Fig. 3 soll das Beispiel Mutten und den restlichen Teil des Textes verständlich machen. Gegenüber der Fig. 1, enthält die Fig. 3 zusätzlich einen Riss 18 in der Spritzbetonschale 3, durch den das Bergwasser eindringen kann, sowie die Vermischung 19 des unbehandelten Bergwassers 1 mit dem behandelten Bergwasser 20.

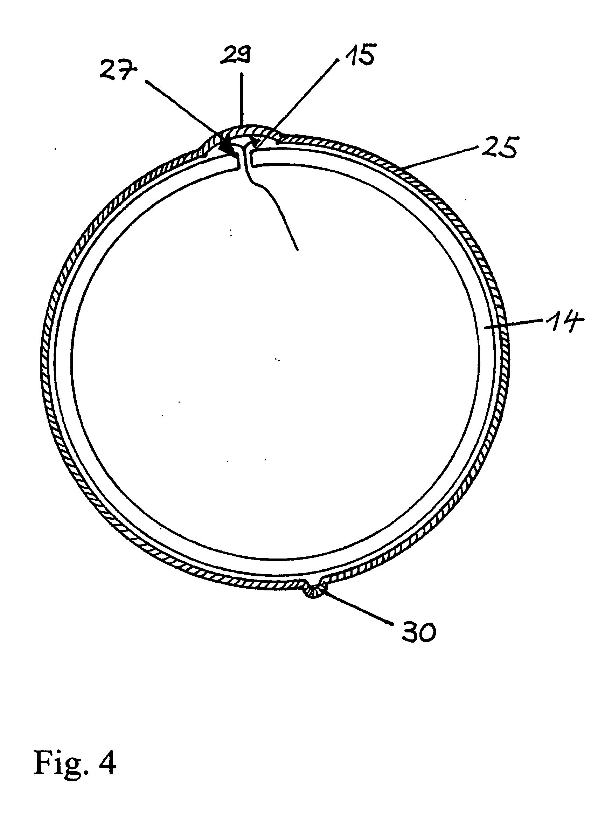

Fig. 4 zeigt einen Schnitt durch eine Schlauchleitung mit Clip 25 zum Schutz der Öffnungen der Schlauchleitung 15 vor Beschädigung und zur Verbesserung der Verteilung des konditionierten Bergwassers 27 in der Sickerpackung 4. Der Clip enthält eine normale Ausbuchtung 29 und eine zusammengepresste Ausbuchtung 30.

### Beispiel 1: Strassentunnel Mutten, im Kanton Graubünden Schweiz (vgl. dazu die linke Hälfte der Figur 1), vertrauliches Pilotprojekt.

Das Bergwasser, das im Strassentunnel anfällt, beträgt am Ende des Tunnels beim Ostportal ca. 5l/s Die saisonalen Schwankungen betragen ca. 30%. Das Bergwasser tritt aus dem Fels 1, wird über Drainagematten 17 oder Vliese in die Sickerpackungen 4 der Drainagerohre 5 geführt, wo es über die Öffnungen der Drainagerohre 21 ins Innere der Drainagerohre 22 selbst gelangt und in regelmässigen Abständen von ca. 100 Metern in den Schächten 7 der Drainagerohre über Ableitungen 8 in die Hauptentwässerungsleitung 9 abgeführt wird. Ein Schutz der Hauptentwässerungsleitung 9 mittels einer Dosieranlage, die ein Konditionierungsmittel zum Bergwasser der Hauptentwässerungsleitung zudosiert, ist problemlos durchführbar, eine Anleitung dazu bietet z.B. die WO 94/19288. Ein Schutz der Drainageleitungen mit Dosieranlagen war bislang schwierig, da das anfallende Bergwasser in regelmässigen Abständen, den sogenannten Halterungen 23, in die Hauptentwässerungsleitung 9 abgeführt wird und dadurch eine Vielzahl von Dosieranlagen notwendig wird.

Ein Bestandteil der vorliegenden Erfindung ist es, durch bauliche Massnahmen, die einzelnen Abschnitte der Drainageleitungen 5 kurzzuschliessen, d.h. miteinander zu verbinden. Zudem kann dadurch die erforderliche Anzahl an Dosieranlagen für das sekundäre Entwässerungssystem stark reduziert werden. Zur Verbindung der Leitungen eignen sich wie bereits erwähnt Halbschalen, Absperrblasen 13, Syphons, Abschlussdeckel, Propfen und dgl.. Erst jetzt kann das primäre Entwässerungssystem auf einfache Art vor der Bildung von harten Ablagerungen geschützt werden.

Zu diesem Zweck werden Pumpen 12, beispielsweise Tauchpumpen, in den Schächten 7 der Gewölbedrainagen plaziert, die das vorkonditionierte Bergwasser 20 über Schlauchleitungen 14 in das primäre Entwässerungsystem zurückführen. Dort wird es über Öffnungen 15 in den Schlauchleitungen 14 in die Sickerpackungen 4 geleitet.

Damit die Öffnungen 15 der Schlauchleitungen nicht beschädigt oder durch Schüttgut verstopft werden, kann als Schutz vorteilhafterweise ein sogenannter Clip 25 angebracht werden (vgl. dazu Fig. 4). Bei entsprechender Ausführung dient der Clip zudem zur besseren Verteilung des konditionierten Bergwassers in den Sickerpackungen, da er das aus den Öffnungen tretende konditionierte Bergwasser 27 in Richtung beider Tunnellängsachsen ablenkt und dadurch eine wesentlich bessere Verteilung im Vergleich zur konventionellen Öffnung 15 erreicht.

Die Figur 4 zeigt einen Schnitt durch eine Schlauchleitung mit zugehörigem Clip 25. In diesem Beispiel besteht der Clip 25 nur aus einem einfachen Stahlring mit einer Breite von 2 - 20 mm und einer Wandstärke von 0,1 - 2 mm, einem Durchmesser von 6 bis 52 mm und zwei normalen Ausbuchtungen 29.

Bei der Montage des Clips 25 an die Schlauchleitung wird eine der beiden Ausbuchtungen 29 des Clips 25 mechanisch verkleinert bis eine zusammengepresste Ausbuchtung 30 entsteht. Gleichzeitig verkleinert sich dadurch der Gesamtumfang des Clips 25 und es entsteht eine feste Verbindung mit der Schlauchleitung 14. Die zweite Ausbuchtung 29 muss nach dem Anpressen des Clips an die Schlauchleitung 14 genau über der Öffnung der Schlauchleitung 15 zu liegen kommen, damit die Funktionstüchtigkeit gewahrt bleibt.

Das zurückgeführte Bergwasser 20 muss dabei genügend Konditionierungsmittel aufweisen, damit das frisch anfallende Bergwasser 1 im primären Entwässerungssystem geschützt wird. Die Pumpe 12 muss den Anforderungen an eine ausreichende Fördermenge von 0,1 bis 50 l/s und einem ausreichenden Förderdruck von 0,1 bis 5 bar genügen, und dabei gleichzeitig geringe Abmessungen aufweisen, sodass eine Installation in einem Schacht 7 der Gewölbedrainage problemlos möglich ist. Fällt in dem Schacht 7 der Gewölbedrainage wenig Bergwasser an, besteht die Gefahr, dass die Pumpe 12 "trockenläuft" und einen Defekt erleidet. Deshalb ist es sinnvoll, in den Schächten 7 der Gewölbedrainage das Bergwasser einzustauen, sodass der Pumpe während den Förderzeiten genügend Bergwasser zur Verfügung steht.

Sind die behandelten Bergwassermengen im sekundären Entwässerungssystem begrenzt, was die Regel ist, so muss gewährleistet sein, dass für alle zu behandelnden Abschnitte des primären Entwässerungssystems ausreichend Rückführwasser zur Verfügung steht. In diesem Fall empfiehlt es sich, die Pumpe 12 mit einer Zeitschaltuhr 24 zu steuern, sodass nur soviel behandeltes Bergwasser 20 aus dem sekundären Entwässerungssystem entnommen und in das primäre Entwässerungssystem zurückgeführt wird, dass dort nach der Vermischung mit dem unbehandelten Bergwasser 19 die Konzentration an Konditionierungsmittel erreicht wird, um Ablagerungen in diesem Abschnitt des primären Entwässerungssystems zu verhindern. Diese minimale Konzentration liegt in der Regel zwischen 0,1 und 10 ppm.

Die Steuerung der Tauchpumpe 12 kann kostengünstig ausgeführt werden, wenn man dazu eine digitale Schaltuhr 24 verwendet, deren zeitlicher Zyklus frei gewählt werden kann. Mechanische Zeitschaltuhren eignen sich wegen des hohen Programmieraufwandes und der meist vorgegebenen Zyklen nur bedingt. Die Fördermengen der Pumpen 12, beispielsweise der Tauchpumpen und die zugehörigen Schlauchleitungen 14, sollen so gewählt werden, dass die erforderlichen Betriebszeiten der Pumpen deutlich geringer sind, als die zugehörigen Standzeiten, denn dadurch kann auch in Fällen von Bergwassermangel sichergestellt werden, dass die Pumpen nicht so schnell überhitzen und diese Trockenperioden meist unbeschadet überstehen. Eine geeignete Pumpe 12, präziser Tauchpumpe, ist im vorliegenden Beispiel, dem Tunnel Mutten jene, die auf dem Markt unter dem Namen Grundfos KP 150 A1, erhältlich ist.

Die Betriebszeiten betragen, beim Tunnel Mutten, für einen 100 Meter langen Abschnitt zwischen 5 und 30 sec, die zugehörigen Standzeiten reichen demnach von 30 bis 55 sec. Für andere Bauwerke ist unter Umständen auch ein Dauerbetrieb ohne Standzeiten denkbar. Insbesondere dann, wenn die Konzentrationen an Konditioniermittel im behandelten Bergwasser 20 tief sind, z.B. gegen Ende des Tunnels oder der zu behandelnden Strecke, ist eine Erhöhung der Betriebszeiten zwingend, damit nach der Vermischung mit dem unbehandelten Bergwasser 19 die minimalen Konzentrationen an Konditionierungsmittel erreicht werden. Für das Verfahren eignen sich Schlauchleitungen 14 von 5 bis 50 mm Durchmesser, beim Tunnel Mutten wurde eine Schlauchleitung 14 mit einem Durchmesser von 22 mm gewählt. Die Öffnungen der Schlauchleitungen 15 schwanken von 0,5 bis 10 mm, beim Tunnel Mutten wurden Öffnungen mit 2 mm verwendet. Der Abstand der Öffnungen kann von 0,1 bis 25 Meter variieren, beim Tunel Mutten wurde ein Abstand von 10 Meter gewählt. Die Schlauchlänge richtet sich nach dem Abstand der Schächte der Gewölbedrainage 23 und variiert zwischen 10 und 500 Meter, in der Regel aber liegt sie zwischen 60 und 100 Meter. Bei grossen Schlauchleitungslängen ist es sinnvoll, den Schlauch durch die Schächte der Drainage durchzuführen. Dazu müssen pro Schacht 2 Bohrungen erstellt werden. Zur Verbindung der einzelnen Schlauchabschnitte in den Schächten sind Verbindungsstücke einzubauen. Die Verbindungen lassen sich jederzeit wieder entfernen und dienen damit zur periodischen Reinigung der Schlauchleitung und zur späteren Umstellung der Gesamtanlage bei Bedarf. Mit diesen Vorgaben erreicht man, für jede einzelne Öffnung der Schlauchleitung 14, Dosiermengen von 0,1bis 10 l/min, die aber fallweise anzupassen sind.

Ein wesentlicher Vorteil der beschriebenen Lösung liegt darin, dass für die Konditionierung des Bergwassers im primären Entwässerungssystem keine zusätzlichen Kosten für das Konditionierungsmittel anfallen. Zudem können, bedingt durch die vorgängige Verdünnung des Konditionierungsmittels mit Bergwasser, sehr geringe Mengen an Konditionierungsmittel in das primäre Entwässerungssystem gebracht werden. Dies wäre in unverdünnter Form nicht möglich, denn die minimalen Dosiermengen an Konditionierungsmittel für herkömmliche Dosierpumpen betragen rund 100 l/Jahr. Des weiteren sind Konditionierungsmittel in der Regel sehr zähflüssig, was eine gleichmässige Dosierung in unverdünnter Form, mit einem einzigen Schlauch und mehreren Öffnungen, mehr oder weniger verunmöglicht. Ein weiterer wichtiger Vorteil liegt darin, dass während der Bauphase nur die Schlauchleitungen verlegt werden müssen. Der Entscheid darüber, ob und falls ja, in welchen Abschnitten, das Bergwasser des sekundären Entwässerungssystems konditioniert und danach mittels Pumpen 12 in vordefinierte Bereiche des primären Entwässerungssystems zurückbefördert werden muss, kann zu jedem beliebigen späteren Zeitpunkt getroffen werden. Dies bedeutet, dass die Rückführkonditionierung des Bergwassers nur in jenen Abschnitten eingesetzt werden kann, in denen sie wirklich nötig ist (Fig. 1 linke Hälfte), weil sich beispielsweise gerade in diesen Abschnitten harte Ablagerungen im Beobachtungszeitraum gebildet haben. Dies spart demzufolge sehr viele Kosten ein. Eine kostengünstigere Variante für eine wirksame Konditionierung des Bergwassers im primären Entwässerungssystems ist nur schwer vorstellbar. Die Variante der Bündeldosierung, d.h. mehrere Dosierleitungen befördern das Konditionierungsmittel an vordefinierte Stellen des primären Entwässerungssystems, scheidet aus Kostengründen von vornherein aus, zudem ist die technische Realisation dieser Variante sehr heikel und aufwendig.

Eine besonders bevorzugte Variante der Konditionierung des Bergwassers im primären Entwässerungssystem ergibt sich aus der Kombination der Lösung mit der Rückführung des bereits konditionierten Bergwassers aus dem sekundären Entwässerungssystem und dem Einsatz von Depotsteinen. Sehr oft ist die Installation der Pumpen 12 zur Rückführung des konditionierten Bergwassers 20 in das primäre Entwässerungssystem während der Bauzeit nicht möglich oder mit grossem Aufwand verbunden, und kann deshalb erst kurz vor oder nach der Inbetriebnahme des Bauwerks erfolgen. Durch die Bautätigkeit gelangen Schlamm und Feinanteile in die Schächte des Entwässerungssystems. Fördern nun die Tauchpumpen Bergwasser aus verschmutzten Schächten in die Schlauchleitungen, führt dies zwangsläufig zur Verstopfung der Öffnungen der Schlauchleitungen. Je nach Tunnelbauwerk ergeben sich dadurch Wartezeiten von 1 bis 10 Jahren. Gerade in dieser Zeit müssen die Bauverantwortlichen mit starken Ablagerungen, insbesondere durch den Kontakt des Bergwassers mit frischen zementhaltigen Bauteilen, rechnen. Zudem ist während der Bauzeit die Erhöhung des pH-Wertes durch die alkalischen Baustoffe am grössten und die Wirkung der herkömmlichen Konditionierungsmittel sinkt bekannterweise bei steigendem pH-Wert, sodass in dieser Zeit eine besonders hohe Konzentration an Konditionierungsmittel erforderlich ist. Aus diesen Gründen ist die Kombination von Depotsteinen, die bereits während der Bauphase, insbesondere in den stark wasserführenden Zonen im primären Entwässerungssystem ausgelegt werden, und der Rückführung des konditionierten Bergwassers mittels Pumpen die optimale Lösung. Die erforderliche Menge an Depotsteinen ergibt sich einerseits aus den hydrolgeologischen Verhältnissen des Tunnelbauwerks und andererseits aus den Bauprogrammen, die über den frühestmöglichen Einsatzzeitpunkt des Pumpensystems entscheiden. Es ist also von grossem Vorteil, während der Bauphase zum provisorischen Schutz vor harten Ablagerungen Depotsteine in das primäre Entwässerungssystem, vorzugsweise in die Sickerpackungen 4, die Sickerschichten, die Drainagebohrungen, die Vliese oder die Drainagematten einzubauen.

Eine besonders bevorzugte Form der Konditionierung des Bergwassers des primären Entwässerungssystems ergibt sich durch die Verwendung von Polyasparaginsäure als Konditionierungsmittel in Mengen von 0,1 g/m³ bis 10000 g/m³ für die vorgängige Behandlung des Bergwassers im sekundären Entwässerungssystem. Die Polyasparaginsäure hat sich in den vergangenen 5 Jahren bezüglich der Wirksamkeit, den Kosten, der Umweltfreudlichkeit (vollständig biologisch abbaubar) und der universellen Anwendbarkeit - insbesondere bei hohen pH-Werten - gegenüber allen anderen Konditionierunsgmitteln bei fast allen Tunnelbauwerken in der Schweiz durchgesetzt. Gleichzeitig empfiehlt es sich für die zum Einsatz kommenden Depotsteine, solche mit einem wirksamen Gehalt an Polysuccinimid oder dessen Teilhydrolysate, gegebenenfalls im Gemisch mit Hilfsstoffen aus gesättigten oder ungesättigten, linearen oder verzweigten Aryl- oder Alkyl-Verbindungen mit 5 bis 50 Kohlenstoffatomen, insbesondere Fettsäuren, speziell Laurinsäure, zu verwenden, denn aus dieser Substanz bildet sich, in Abhängigkeit vom pH-Wert des Bergwassers, wiederum Polyasparaginsäure, die ja, wie bereits beschreiben, allen bekannten Konditionierungsmitteln vorzuziehen ist.

Als weitere Trägersubstanz für Depotsteine eignet sich Polycaprolacton besonders gut, da dieser Kunststoff, der biologisch abbaubar ist, die Auflösegeschwindigkeit der Steine gegenüber herkömmlichen Trägersubstanzen massiv verringert. Zudem eignet sich das Trägermaterial Polycaprolacton zur Herstellung der Steine im Extruder. Ein wirksamer Gehalt an Polysuccinimid oder dessen Teilhydrolysate liegt zwischen 0,1 g/m³ und 10000 g/m³ bezogen auf m³ des zu behandelnden Bergwassers. Idealerweise ist eine Kombination des Einsatzes von Flüssigkonditionierung und Depotsteinen, zur Behandlung des Bergwassers im primären Entwässerungssystem eines Tunnelbauwerks anzustreben.

Nun wird in der Praxis leider oft der Fall auftreten, bei welchem das System zur Rückführung des konditionierten Bergwassers in das primäre Entwässerungssystem zu spät, zu wenig effizient, oder gar nicht in Betrieb genommen wird. Die Gründe dafür können unterschiedlich sein, z.B. Kosteneinsparungen aber auch Fehleinschätzungen des Ablagerungsverhaltens im System. Das Resultat dieser Unterlassung wird oft erst nach Jahren in vollem Ausmass sichtbar, nämlich dann, wenn die Bergwassermengen aus den einzelnen Drainagerohrabschnitten immer mehr zurückgehen und sich in der Folge ein Wasserdruck auf die Tunnelschale ausbreitet, mit den Eingangs beschriebenen Folgen. Sind die Sickerschichten um die Drainagerohre erst einmal verstopft, kann die nachträgliche Zugabe von konditioniertem Bergwasser nicht mehr viel bewirken. Herkömmliche Konditionierungsmittel vermögen normalerweise bestehende Ablagerungen bestenfalls über lange Zeiträume aufzuweichen und teilweise ein wenig aufzulösen, aber die Wirkung bleibt bescheiden und ist nicht immer erfolgversprechend.

In solchen Fällen empfiehlt sich die wenigstens zeitweise direkte Zugabe von Säuren über die Schlauchleitung 14 und deren Öffnungen 15 in das primäre Entwässerungssystem. Im primären Entwässerungssystem verteilt sich die Säure und löst die bereits bestehenden Ablagerungen rasch auf. Gerade an den Stellen, die immer noch Teile des Bergwassers durchzuleiten vermögen, wird durch die Zugabe der Säure die Wasserwegsamkeit rasch und deutlich erhöht. Zur Behandlung eigenen sich grundsätzlich alle gängigen Säuren gegebenenfalls in Verbindung mit einer Pufferlösung wobei die Umweltschutzaspekte zu beachten sind und deshalb z.B. eher schwache Säuren, wie z.B. Essig-, Zitronen- oder Milchsäure, zu bevorzugen sind. Unabhängig vom Umweltschutzgedanken kann man sagen, dass Aminosulphonsäuren sowie andere Chemikalien zur Entkalkung die beste Wirkung für die beschriebene Anwendung ergeben würden.

Grundsätzlich ist die Zugabe von Säuren zu dem i.d.R. sehr alkalischen Bergwasser (bis pH-Wert 10 beim Tunnelportal) nicht unbedenklich, denn sie bedeutet eine Zusatzbelastung durch die erhöhte Salzfracht, aber teilweise ist sie sogar notwendig, wenn die Einleitbedingungen wegen des zu hohen pH-Wertes nicht erreicht werden. Die in das primäre Entwässerungssystem zudosierte Säure wird in kurzer Zeit durch die frei werdenden Öffnungen der Drainagerohre 21 ins Innere der Drainagerohre 22 geleitet und kann in den Schächten 7 gesammelt und wieder in das primäre Entwässerungssystem zurückgeführt werden. Der Vorgang der Rückführung kann mehrmals wiederholt werden bis der pH-Wert des zurückgeführten Bergwassers durch die Vermischung mit frischem Bergwasser über die Wirksamkeitsgrenze von 5 bis 6 angestiegen ist. Danach kann das beaufschlagte Bergwasser entweder in Behältern aufgefangen und entsorgt werden oder kann z.B. bei grossen Vorflutern direkt eingeleitet werden. Um eine Belastung der Umwelt weitgehend auszuschliessen, ist es auch möglich, die mit Säure behandelten Abschnitte abzuschotten und das zirkulierte Bergwasser dieser Abschnitte nach der Behandlung separat zu entsorgen.

Gerade bei Bauwerken, die nur sehr wenig Bergwasser mit einem sehr hohen pH-Wert aufweisen wie beispielsweise die ICE-Neubaustrecken der Deutschen Bahn AG ist das Verfahren mit der Rückführung von Säure besonders wirkungsvoll und wirtschaftlich.

Der Vollständigkeit halber sei erwähnt, dass die technischen Einrichtungen wie Pumpen und Schläuche die physikalischen Anforderungen an die beschriebene Säuredosierung erfüllen müssen.

## Patentansprüche

1. Verfahren zur Verhinderung von Ablagerungen in Tunnelbauten, **dadurch gekennzeichnet, dass** dem Bergwasser im sekundären Teil des Entwässerungssystems ein oder mehrere Wasserkonditionierungsmittel beigemischt werden und danach dieses Bergwasser dem primären Entwässerungssystem zugeführt wird.

2. Verfahren nach Anspruch 1 **dadurch gekennzeichnet, dass** zur Konditionierung des Bergwassers im sekundären Entwässerungssystem die Drainagerohre (5) in den Schächten (7) kurzgeschlossen werden.

3. Verfahren nach Anspruch 1 oder 2, **dadurch gekennzeichnet, dass** der primäre Teil des Entwässerungssystems die Elemente umfasst, die nach Fertigstellung des Bauwerks nicht mehr frei zugänglich sind, wie die anstehende Felsoberfläche (2) mit ihren Klüften, Noppenbahnen, Drainagematten (17), Vliese, Drainagebohrungen, Drainagerohre (5) (aussen), Sickerpackungen (4) um die Drainagerohre (5) herum, Sickerschichten, Öffnungen (21) der Drainagerohre (5) und dgl., und dass der sekundäre Teil des Entwässerungssystems die Elemente umfasst, die nach der Fertigstellung des Bauwerks frei zugänglich sind, wie Drainagerohre (22) (innen), Schächte (7), Schlammsammler, Ableitungen (8), Hauptentwässerungsleitungen (9), und dgl.

4. Verfahren nach Anspruch 1 bis 3, **dadurch gekennzeichnet, dass** für die Konditionierung des Bergwasser im sekundären Entwässerungssystem, ein oder mehrere Konditionierungsmittel in einer Gesamtmenge von 0,1g/m³ bis 10000 g/m³ bezogen auf m³ des zu behandelnden Bergwassers zugegeben wird.

5. Verfahren nach Anspruch 1 bis 4, **dadurch gekennzeichnet, dass** als Konditionierungsmittel Polysuccinimid, Polysuccinimid in Kombination mit Fettsäuren, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, Stärke oder Dextrine, Proteine und andere Eiweissprodukte, wasserlösliche Polyaminosäuren, Polyasparaginsäure, Silikate, Wasserglas oder Zeolithe oder Mischungen respektive Kombinationen von diesen Konditionierungsmitteln eingesetzt werden.

6. Verfahren nach Anspruch 1 bis 5, **dadurch gekennzeichnet, dass** als Konditionierungsmittel Ligninsulfonate, sulfonierte Kondensationsprodukte des Naphthalins mit Formaldehyd, Polyacrylate, Polymethacrylate, Polyacrylamide und Copolymere von Acrylsäure bzw. Methacrylsäure und Acrylamid, Phosphinsäure-haltige Homo- und Copolymere von Acrylsäure und Acrylamid und oligomere Phosphinico-Bernsteinsäure-Verbindungen, sulfomethylierte oder sulfoethylierte Polyacrylamide und Polymethacrylamide und Copolymere bzw. Terpolymere mit Acrylsäure und Maleinsäureester, N-Butylacrylamid und dessen Copolymere und Acrylamidopropionsulfonsäure und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure oder Mischungen respektive Kombinationen von diesen Konditionierungsmitteln eingesetzt werden.

7. Verfahren nach den Ansprüchen 1-4, **dadurch gekennzeichnet, dass** als Konditionierungsmittel Polyasparaginsäure oder Salze davon und/oder ihr Vorläufer Polysuccinimid (PSI) oder ein Teilhydrolysat davon dem zu behandelndem Bergwasser, in einer Menge von 0,1 g/m³ bis 10000 g/m³ zugegeben wird (werden).

8. Verfahren nach einem der Ansprüche 1 bis 4 **dadurch gekennzeichnet, dass** als Konditionierungsmittel Säure, gegebenenfalls in Verbindung mit einer Pufferlösung verwendet wird, um bestehende Ablagerungen im primären Entwässerungssystem ganz oder teilweise aufzulösen oder zu mobilisieren, wobei bevorzugt Essigsäure, Zitronensäure und/oder Milchsäure verwendet werden können.

9. Verfahren nach den Ansprüchen 1 - 8, **dadurch gekennzeichnet, dass** während der Bauphase zum provisorischen Schutz vor harten Ablagerungen Depotsteine in das primäre Entwässerungssystem, vorzugsweise in die Sickerpackungen (4), die Sickerschichten, die Drainagebohrungen, die Vliese oder in die Drainagematten (17) eingebaut werden.

10. Verfahren nach Anspruch 9, **dadurch gekennzeichnet, dass** die Depotsteine einen wirksamen Gehalt an Polysuccinimid oder dessen Teilhydrolysate in einer Menge von 0,1 g/m³ bis 10000 g/m³ bezogen auf m³ des zu behandelnden Bergwassers und/oder von 25 bis 95 Gewichtsprozenten bezogen auf das Depotsteingewicht gegebenenfalls im Gemisch mit Hilfsstoffen aus gesättigten oder ungesättigten, linearen oder verzweigten Aryl- oder Alkyl-Verbindungen mit 5 bis 50 Kohlenstoffatomen, insbesondere Fettsäuren, speziell Laurinsäure enthalten.

11. Verfahren nach Anspruch 9, **dadurch gekennzeichnet, dass** die Depotsteine einen wirksamen Gehalt an Polysuccinimid oder dessen Teilhydrolysate in einer Menge von 25 - 95 Gewichtsprozenten bezogen auf das Depotsteingewicht im Gemisch mit der Trägersubstanz Polycaprolacton enthalten.

12. Verfahren, nach einem der Ansprüche 1 - 11, **dadurch gekennzeichnet, dass** zur Zuführung des konditionierten Bergwassers (20) aus dem sekundären Teil des Entwässerungssystems in das primäre Entwässerungssystem Pumpen (12), verwendet werden und es sich dabei vorzugsweise um Tauchpumpen handelt

13. Verfahren nach Anspruch 12, **dadurch gekennzeichnet, dass** die Pumpen (12), in den Schächten (7) der Drainageleitung plaziert werden.

14. Verfahren nach einem der Ansprüche 12 oder 13, **dadurch gekennzeichnet, dass** die Pumpen (12), mit mindestens einer Schlauchleitung verbunden sind, die mit Öffnungen versehen sind (15) und dazu dienen, das konditionierte Bergwasser (20) aus dem sekundären Entwässerungssystem, im primären Entwässerungssystem zu verteilen.

15. Verfahren nach einem der Ansprüche 12 bis 14, **dadurch gekennzeichnet, dass** die Pumpen (12), mit jeweils einer Zeitschaltuhr (24), gesteuert sind, damit nur soviel konditioniertes Bergwasser (20) aus dem Drainagerohr (5) entnommen wird, dass die minimalen Konzentrationen an Konditionierungsmittel nach dem Vermischen mit dem unbehandelten Bergwasser (19) im primären Entwässerungssystem gerade erreicht wird und **dadurch** ein möglichst langer Tunnelabschnitt behandelt werden kann.

16. Verfahren nach einem der Ansprüche 12 bis 15, **dadurch gekennzeichnet, dass** die Pumpen (12), mit einer digitalen Zeitschaltuhr (24) so gesteuert werden, dass die optimalen Konzentrationen an Konditionierungsmittel im primären Entwässerungssystem erreicht werden.

17. Verfahren nach einem der Ansprüche 12 bis 16, **dadurch gekennzeichnet, dass** die Pumpen (12), von den anfallenden Wassermengen in den Schächten (7) und den darin enthaltenen Konzentration an Konditionierungsmittel (20) gesteuert sind.

18. Verfahren nach einem der Ansprüche 12 bis 17, **dadurch gekennzeichnet, dass** das behandelte Bergwasser im Schacht (7) eingestaut wird, damit die Pumpen (12), problemlos fördern können.

19. Verfahren nach einem der Ansprüche 14 bis 18, **dadurch gekennzeichnet, dass** die Schlauchleitung (14) zur Rückführung des konditionierten Bergwassers im primären Teil des Entwässerungssystems eine Länge zwischen 10 und 500 m, vorzugsweise zwischen 50 und 300 m, hat, dass der Schlauchdurchmesser zwischen 5 und 50 mm, vorzugsweise zwischen 10 und 30 mm, variiert, dass die Durchmesser der Öffnungen (15) in der Schlauchleitung im Bereich von 0,1 bis 10 mm, vorzugsweise von 0,5 bis 5 mm, liegen und dass der Abstand dieser Öffnungen (15) 0,1 bis 25 m, vorzugsweise 1 bis 15 m, beträgt.

20. Verfahren nach einem der Ansprüche 14 bis 19, **dadurch gekennzeichnet, dass** die Schlauchleitungen durch die Schächte (7) der Drainage geführt werden und dort mit Verbindungsstücken verbunden sind.

21. Verfahren nach einem der Ansprüche 14 bis 20, **dadurch gekennzeichnet, dass** die Öffnungen (15) der Schlauchleitungen mit Clips (25) versehen sind damit sie vor Beschädigungen geschützt sind und damit das konditionierte Bergwasser (27) in Richtung der Tunnellängsachsen flächenhaft verteilt wird.

22. Verfahren nach Anspruch 21 **dadurch gekennzeichnet, dass** der Clip (25) aus einem Stahlband besteht, das mit 2 Ausbuchtungen versehen ist (29) und dass der Clip (25) bevorzugt durch die mechanische Verkleinerung einer der beiden Ausbuchtungen fest mit der Schlauchleitung verbunden wird.

23. Vorrichtung zur Verhinderung von Ablagerungen in Tunnelbauten, **dadurch gekennzeichnet, dass** erste Mittel vorgesehen sind, mit welchen dem Bergwasser im sekundären Teil des Entwässerungssystems ein oder mehrere Wasserkonditionierungsmittel beigemischt werden, und zweite Mittel vorgesehen sind, mit welchen dieses Bergwasser dem primären Entwässerungssystem zugeführt wird.

24. Vorrichtung nach Anspruch 23, **dadurch gekennzeichnet, dass** es sich bei den ersten Mitteln um wenigstens eine Dosieranlage (10, 11) mit Dosierleitungen handelt.

25. Vorrichtung nach einem der Ansprüche 23 oder 24, **dadurch gekennzeichnet, dass** es sich bei den zweiten Mitteln u.a. um wenigstens eine Pumpe (12) mit mindestens einer Schlauchleitung, welche mit Öffnungen versehen sind und im primären Entwässerungssystem verlegt sind, handelt, wobei die Pumpen (12) das konditionierte Wasser des sekundären Entwässerungssystems über die Schlauchleitung(en) dem primären Entwässerungssystem zuführen.

26. Vorrichtung nach Anspruch 25, **dadurch gekennzeichnet, dass** die Schlauchleitung ein Schlauchleitung ist mit Öffnungen (15), wobei im Bereich der Öffnungen (15) umlaufende Clips (25), welche aus einem Stahlband bestehen, das mit wenigstens einer Ausbuchtung über den Öffnungen (15) versehen ist (29), vorgesehen sind.

27. Vorrichtung nach einem der Ansprüche 23 bis 26 zur Durchführung eines Verfahrens nach einem der Ansprüche 1-22.

## Claims

1. Process for preventing deposits in tunnels, **characterized in that** one or more water conditioning agents are added to the mine water in the secondary part of the drainage system and thereafter this mine water is fed to the primary drainage system.

2. Process according to Claim 1, **characterized in that,** for conditioning the mine water in the secondary drainage system, the drainage pipes (5) in the shafts (7) are short-circuited.

3. Process according to Claim 1 or 2, **characterized in that** the primary part of the drainage system comprises the elements which, after completion of the structure, are no longer freely accessible, such as the outcropping rock surface (2) with its crevasses, dimpled sheets, drainage mats (17), non-wovens, drainage bore holes, drainage pipes (5) (exterior), seepage packings (4) around the drainage pipes (5), seepage layers, orifices (21) of the drainage pipes (5) and the like, and **in that** the secondary part of the drainage system comprises the elements which are freely accessible after completion of the structure, such as drainage pipes (22) (interior), shafts (7), sludge collectors, outlet lines (8), main drainage lines (9) and the like.

4. Process according to Claims 1 to 3, **characterized in that,** for conditioning the mine water in the secondary drainage system, one or more conditioning agents are added in a total amount of 0.1 g/m³ to 10 000 g/m³, based on m³ of the mine water to be treated.

5. Process according to Claims 1 to 4, **characterized in that,** as conditioning agents, polysuccinimide, polysuccinimide in combination with fatty acids, succinimide, carbohydrates, polysaccharides, gluconates, polyglycosides, polyglucosides and derivatives thereof, polyoxycarboxylic acids and also copolymers thereof, oxidized carbohydrates, starch or dextrines, proteins and other protein products, watersoluble polyamino acids, polyaspartic acid, silicates, water glass or zeolites or mixtures or combinations of these conditioning agents are used.

6. Process according to Claims 1 to 5, **characterized in that,** as conditioning agents, lignosulphonates, sulphonated condensation products of naphthalene with formaldehyde, polyacrylates, polymethacrylates, polyacrylamides and copolymers of acrylic acid or methacrylic acid and acrylamide, phosphinic acid-containing homo- and copolymers of acrylic acid and acrylamide and oligomeric phosphinicosuccinic acid compounds, sulphomethylated or sulphoethylated polyacrylamides and polymethacrylamides and copolymers or terpolymers with acrylic acid and maleic esters, N-butylacrylamide and copolymers thereof and acrylamidopropionosulphonic acid and copolymers thereof, in addition phosphinoalkylated acrylamide polymers and copolymers with acrylic acid, copolymers of alkenes with unsaturated dicarboxylic acids, and polymers and copolymers based on maleic acid or mixtures or combinations of these conditioning agents are used.

7. Process according to Claims 1-4, **characterized in that,** as conditioning agents, polyaspartic acid or salts thereof and/or its precursor polysuccinimide (PSI) or a partial hydrolysate thereof is (are) added to the mine water to be treated in an amount of 0.1 g/m³ to 10 000 g/m³.

8. Process according to any one of Claims 1 to 4, **characterized in that,** as conditioning agent, acid, optionally in combination with a buffer solution, is used, in order to dissolve completely or partially or to mobilize existing deposits in the primary drainage system, wherein, preferably, acetic acid, citric acid and/or lactic acid can be used.

9. Process according to Claims 1-8, **characterized in that,** during the construction phase, for provisional protection against hard deposits, slow-release bricks are built into the primary drainage system, preferably into the seepage packings (4), the seepage layers, the drainage bore holes, the non-wovens or into the drainage mats (17).

10. Process according to Claim 9, **characterized in that** the slow-release bricks have an active content of polysuccinimide or partial hydrolysates thereof in an amount of 0.1 g/m³ to 10 000 g/m³, based on m³ of the mine water to be treated and/or of 25 to 95 per cent by weight based on the slow-release brick weight, optionally in a mixture with auxiliaries of saturated or unsaturated, linear or branched aryl or alkyl compounds having 5 to 50 carbon atoms, in particular fatty acids, especially lauric acid.

11. Process according to Claim 9, **characterized in that** the slow-release bricks have an active content of polysuccinimide or partial hydrolysates thereof in an amount of 25-95 per cent by weight, based on the slow-release brick weight in a mixture with the carrier substance polycaprolactone.

12. Process according to any one of Claims 1-11, **characterized in that,** for supplying the conditioned mine water (20) from the secondary part of the drainage system into the primary drainage system, pumps (12) are used, and these are preferably submersible pumps.

13. Process according to Claim 12, **characterized in that** the pumps (12) are placed in the shafts (7) of the drainage line.

14. Process according to either of Claims 12 and 13, **characterized in that** the pumps (12) are connected by at least one flexible hose line and are provided with orifices (15) and serve for distributing the conditioned mine water (20) from the secondary drainage system in the primary drainage system.

15. Process according to any one of Claims 12 to 14, **characterized in that** the pumps (12) are each controlled by a timer switch (24), so that only as much conditioned mine water (20) is taken off from the drainage pipe (5) such that the minimum concentration of conditioning agent after mixing with the untreated mine water (19) in the primary drainage system is just achieved and thereby a tunnel section which is as long as possible can be treated.

16. Process according to any one of Claims 12 to 15, **characterized in that** the pumps (12) are controlled by a digital timer switch (24) in such a manner that the optimum concentrations of conditioning agent in the primary drainage system are achieved.

17. Process according to any one of Claims 12 to 16, **characterized in that** the pumps (12) are controlled by the amounts of water occurring in the shafts (7) and the concentration present therein of conditioning agent (20).

18. Process according to any one of Claims 12 to 17, **characterized in that** the treated mine water is backed up in the shaft (7) in order that the pumps (12) can transport it without problems.

19. Process according to any one of Claims 14 to 18, **characterized in that** the flexible hose line (14) for recirculating the conditioned mine water in the primary part of the drainage system has a length of between 10 and 500 m, preferably between 50 and 300 m, **in that** the flexible hose diameter varies between 5 and 50 mm, preferably between 10 and 30 mm, **in that** the diameter of the orifices (15) in the flexible hose line are in the range from 0.1 to 10 mm, preferably from 0.5 to 5 mm, and **in that** the distance between these orifices (15) is 0.1 to 25 m, preferably 1 to 15 m.

20. Process according to any one of Claims 14 to 19, **characterized in that** the flexible hose lines are passed through the shafts (7) of the drainage system and are connected there by connection pieces.

21. Process according to any one of Claims 14 to 20, **characterized in that** the orifices (15) of the flexible hose lines are provided with clips (25) in order that they are protected against damage and in order that the conditioned mine water (27) is distributed extensively in the direction of the longitudinal axes of the tunnel.

22. Process according to Claim 21, **characterized in that** the clip (25) consists of a steel strip which is provided with two bulges (29) and **in that** the clip (25) is firmly attached to the flexible hose line preferably by mechanical size reduction of one of the two bulges.

23. Device for preventing deposits in tunnels, **characterized in that** a first means is provided by means of which one or more water conditioning agents are admixed with the mine water in the secondary part of the drainage system, and a second means is provided by means of which this mine water is fed to the primary drainage system.

24. Device according to Claim 23, **characterized in that** the first means is at least one metering system (10, 11) having metering lines.

25. Device according to either of Claims 23 and 24, **characterized in that** the second means is, inter alia, at least one pump (12) having at least one flexible hose line which is provided with orifices and is laid in the primary drainage system, wherein the pumps (12) feed the conditioned water of the secondary drainage system to the primary drainage system via the flexible hose line(s).

26. Device according to Claim 25, **characterized in that** the flexible hose line is a flexible hose line having orifices (15), wherein in the region of the orifices (15) encircling clips (25) are provided, which clips consist of a steel strip which is provided with at least one bulge (29) over the orifices (15).

27. Device according to any one of Claims 23 to 26 for carrying out a process according to any one of Claims 1-22.

## Revendications

1. Procédé destiné à empêcher des dépôts dans des systèmes de tunnels, **caractérisé en ce que** l'on mélange à l'eau d'infiltration, dans la partie secondaire du système de drainage, un ou plusieurs agents de traitement de l'eau et l'on achemine ensuite cette eau d'infiltration au système de drainage primaire.

2. Procédé selon la revendication 1, **caractérisé en ce que** pour le traitement de l'eau d'infiltration dans le système de drainage secondaire, les tuyaux de drainage (5) sont court-circuités dans les puits (7).

3. Procédé selon la revendication 1 ou 2, **caractérisé en ce que** la partie primaire du système de drainage comprend les éléments qui ne sont plus librement accessibles après la finition de l'ouvrage, comme la surface de la roche existante (2) avec ses fissures, bandes à nopes, mats de drainage (17), voiles, perçages de drainage, tuyaux de drainage (5) (extérieurs), garnissages d'infiltration (4) tout autour des tuyaux de drainage (5), des couches d'infiltration, des ouvertures (21) des tuyaux de drainage (5), et similaires, et **en ce que** la partie secondaire du système de drainage comprend les éléments qui sont librement accessibles après la finition de l'ouvrage, comme les tuyaux de drainage (22) (intérieurs), les puits (7), les collecteurs de boue, les conduites d'évacuation (8), les conduites de drainage principales (9), et similaires.

4. Procédé selon les revendications 1 à 3, **caractérisé en ce que** pour le traitement de l'eau d'infiltration dans le système de drainage secondaire, on ajoute un ou plusieurs agents de traitement dans une quantité totale de 0,1g/m³ à 10 000 g/m³ par rapport à un m³ d'eau d'infiltration à traiter.

5. Procédé selon les revendications 1 à 4, **caractérisé en ce que** l'on utilise comme agent de traitement du polysuccinimide, du polysuccinimide en combinaison avec des acides gras, du succinamide, des glucides, des poylsaccharides, des gluconates, des polygylcosides, des polyglucosides et leurs dérivés, des acides polycarboxyliques, ainsi que leurs copolymères, des glucides oxydés, des amidons ou des dextrines, des protéines et autres produits protéiniques, des acides polyaminés hydrosolubles, de l'acide polyaspartique, des silicates, du silicate de potassium ou des zéolithes ou des mélanges et combinaisons de ces agents de traitement.

6. Procédé selon les revendications 1 à 5, **caractérisé en ce que** l'on utilise comme agents de traitement des sulfonates de lignine, des produits de condensation sulfonés de naphtaline avec du formaldéhyde, des polyacrylates, des polyméthacrylates, des polyacrylamides et des copolymères d'acide acrylique ou d'acide méthacrylique et d'acrylamide, des homo- et copolymères contenant de l'acide phosphinique d'acide acrylique et d'acrylamide et des composés oligomères d'acide phosphinico-succinique des polyacrylamides et polyméthacrylamides sulfométhylés ou sulfoéthylés et des copolymères ou terpolymères avec de l'acide acrylique et de l'ester d'acide maléique, du N-butylacrylamide et ses copolymères et de l'acide acrylamidopropionsulfonique et ses copolymères, et aussi des polymères et copolymères d'acrylamide phosphinoalkylés avec de l'acide acrylique, des copolymères d'alcènes avec des acides dicarboxyliques insaturés, et des polymères et copolymères à base d'acide maléique ou des mélanges et combinaisons de ces agents de traitement.

7. Procédé selon les revendications 1 à 4, **caractérisé en ce que** l'on ajoute en tant qu'agent de traitement de l'acide polyasparaginique ou des sels de celui-ci, et/ou ses précurseurs polysuccinimide (PSI) ou un hydrolysat partiel de celui-ci, à l'eau d'infiltration à traiter, en une quantité de 0,1 g/m³ à 10 000 g/m³.

8. Procédé selon l'une quelconque des revendications 1 à 4, **caractérisé en ce que** l'on utilise comme agent de traitement des acides, éventuellement en liaison avec une solution tampon, afin de dissoudre ou de mobiliser complètement ou partiellement les dépôts existants dans le système de drainage primaire, de l'acide acétique, de l'acide citrique et/ou de l'acide lactique pouvant être utilisés de préférence.

9. Procédé selon les revendications 1 à 8, **caractérisé en ce que** pendant la phase de construction, pour la protection provisoire de dépôts durs, on incorpore des pierres de dépôt dans le système de drainage primaire, de préférence dans les garnissages d'infiltration (4), les couches d'infiltration, les perçages de drainage, les voiles ou dans les mats de drainage (17).

10. Procédé selon la revendication 9, **caractérisé en ce que** les pierres de dépôt présentent une teneur active en polysuccinimide ou ses hydrolysats partiels dans une quantité de 0.1 g/m³ à 10 000 g/m³ par rapport à un m³ de l'eau d'infiltration à traiter et/ou de 25 à 95 pour cent en poids par rapport au poids de pierres de dépôt éventuellement en mélange avec des additifs constitués de composés aryles ou alkyles saturés ou insaturés, linéaires ou ramifiés, ayant de 5 à 50 atomes de carbone, en particulier des acides gras, plus spécifiquement de l'acide laurique.

11. Procédé selon la revendication 9, **caractérisé en ce que** les pierres de dépôt présentent une teneur active en polysuccinimide ou ses hydrolysats partiels dans une quantité de 25 à 95 pour cent en poids par rapport au poids de pierres de dépôt en mélange avec la substance vecteur polycaprolactone.

12. Procédé selon l'une quelconque des revendications 1 à 11, **caractérisé en ce que** pour l'apport de l'eau d'infiltration traitée (20) depuis la partie secondaire du système de drainage dans le système de drainage primaire, on utilise des pompes (12) qui sont de préférence en l'occurrence des pompes à immersion.

13. Procédé selon la revendication 12, **caractérisé en ce que** les pompes (12) sont placées dans les puits (7) de la conduite de drainage.

14. Procédé selon l'une quelconque des revendications 12 ou 13, **caractérisé en ce que** les pompes (12) sont connectées à au moins une conduite tubulaire, qui est pourvue d'ouvertures (15) et qui sert à distribuer l'eau d'infiltration traitée (20) depuis le système de drainage secondaire dans le système de drainage primaire.

15. Procédé selon l'une quelconque des revendications 12 à 14, **caractérisé en ce que** les pompes (12) sont commandées par une minuterie respective (24), afin qu'une quantité d'eau d'infiltration traitée (20) soit prélevée du tube de drainage (5) dans une mesure telle que les concentrations minimales d'agent de traitement après le mélange avec l'eau d'infiltration non traitée (19) dans le système de drainage primaire soient atteintes et qu'une portion de tunnel aussi longue que possible puisse être traitée.

16. Procédé selon l'une quelconque des revendications 12 à 15, **caractérisé en ce que** les pompes (12) sont commandées avec une minuterie numérique (24) de telle sorte que les concentrations optimales en agent de traitement soient atteintes dans le système de drainage primaire.

17. Procédé selon l'une quelconque des revendications 12 à 16, **caractérisé en ce que** les pompes (12) sont commandées par les quantités d'eau présentes dans les puits (7) et la concentration en agent de traitement (20) contenu dans celles-ci.

18. Procédé selon l'une quelconque des revendications 12 à 17, **caractérisé en ce que** l'eau d'infiltration traitée dans le puits (7) est comprimée afin que les pompes (12) puissent refouler sans problème.

19. Procédé selon l'une quelconque des revendications 14 à 18, **caractérisé en ce que** la conduite tubulaire (14) pour recirculer l'eau d'infiltration traitée dans la partie primaire du système de drainage a une longueur comprise entre 10 et 500 m, de préférence entre 50 et 300 m, **en ce que** le diamètre du tuyau est compris entre 5 et 50 mm, de préférence entre 10 et 30 mm, **en ce que** le diamètre des ouvertures (15) dans la conduite tubulaire est de l'ordre de 0,1 à 10 mm, de préférence de 0,5 à 5 mm, et **en ce que** la distance entre ces ouvertures (15) est de 0,1 à 25 m, de préférence de 1 à 15 m.

20. Procédé selon l'une quelconque des revendications 14 à 19, **caractérisé en ce que** les conduites tubulaires sont guidées à travers les puits (7) du drainage, et y sont connectées à des raccords de connexion.

21. Procédé selon l'une quelconque des revendications 14 à 20, **caractérisé en ce que** les ouvertures (15) des conduites tubulaires sont pourvues de clips (25) afin d'être protégées contre les endommagements et afin que l'eau d'infiltration traitée (27) soit distribuée dans la direction des axes longitudinaux des tunnels en adhérence avec les surfaces.

22. Procédé selon la revendication 21, **caractérisé en ce que** le clip (25) se compose d'une bande d'acier qui est pourvue de 2 bombements (29) et **en ce que** le clip (25) est connecté fixement à la conduite tubulaire de préférence par le rétrécissement mécanique de l'un des deux bombements.

23. Dispositif destiné à empêcher des dépôts dans des systèmes de tunnels, **caractérisé en ce que** l'on prévoit des premiers moyens, avec lesquels on ajoute à l'eau d'infiltration un ou plusieurs agents de traitement de l'eau, et des deuxièmes moyens sont prévus, avec lesquels cette eau d'infiltration est acheminée au système de drainage primaire.

24. Dispositif selon la revendication 23, **caractérisé en ce que** les premiers moyens sont au moins une installation de dosage (10, 11) avec des conduites de dosage.

25. Dispositif selon l'une quelconque des revendications 23 ou 24, **caractérisé en ce que** les deuxième moyens sont entre autres au moins une pompe (12) avec au moins une conduite tubulaire, qui sont pourvues d'ouvertures et qui sont posées dans le système de drainage primaire, les pompes (12) acheminant l'eau traitée du système de drainage secondaire par le biais de la ou des conduites tubulaires au système de drainage primaire.

26. Dispositif selon la revendication 25, **caractérisé en ce que** la conduite tubulaire est une conduite tubulaire avec des ouvertures (15), des clips (25) circonférentiels étant prévus dans la région des ouvertures (15), lesquels se composent d'une bande d'acier, qui est pourvue d'au moins un bombement (29) au-dessus des ouvertures (15).

27. Dispositif selon l'une quelconque des revendications 23 à 26, pour mettre en oeuvre un procédé selon l'une quelconque des revendications 1 à 22.
